# EUROPEAN PATENT APPLICATION

(11) **EP 4 814 452 A1**
(43) Date of publication of application: **30.09.2026**
(21) Application number: 26167031.9
(22) Date of filing: 24.03.2026
(51) Int. Cl.: G01H 9/00, G01D 5/353, H04B 10/071

(54) **MULTI-SPAN SENSING USING WAVELENGTH / FREQUENCY MULTIPLEXING, SYNCHRONIZED RECEIVER, AND COHERENT SIGNAL PROCESSING**

(30) Priority: 25.03.2025 US 202519089371
(71) Applicant: SubCom, LLC, Eatontown, NJ 07724 (US)
(72) Inventor: Cai, Jin-Xing, Eatontown, 07724 (US); Pilipetskii, Alexei, Eatontown, 07724 (US)
(74) Representative: Arnold & Siedsma

(57) **Abstract**

A receiver system may include a separating component to receive a reflected signal, comprising a frequency chirp-modulated signal, distributed over a plurality of wavelengths, and to separate the reflected signal according to wavelength into a plurality of optical signals; a coherent mixer array comprising a plurality of coherent mixers to mix the plurality of optical signals with a given local oscillator signal; a plurality of photodetectors to receive and convert, after the mixing, the plurality of optical signals into a plurality of electrical signals, respectively; a plurality of ADCs, configured to process the plurality of electrical signals concurrently, and output the plurality of electrical signals as a plurality of digital signals; and a DSP block, configured to receive the plurality of digital signals concurrently and to process the plurality of digital signals to convert the plurality of digital signals into phase data associated with the plurality of wavelengths, respectively.

## Description

### Background

### Field

Embodiments of the present disclosure relate to the field of optical communication systems. In particular, the present disclosure relates to techniques for extending and improving the sensitivity of distributed acoustic sensing (DAS) in subsea optical cables.

### Discussion of Related Art

In a distributed acoustic sensing (DAS) system, an optical cable may be used to provide continuous real-time or near real-time monitoring of perturbances or anomalies in the vicinity of the fiber optic cable (hereinafter cable), and up to many kilometers from the cable. In other words, the cable itself may be used as a distributed sensing element to detect or monitor different types of disruptions, interferences, irregularities, activities whether natural or manmade occurring in or out of the undersea environment, etc. as acoustic vibrations in the DAS sensing environment (e.g., oceanic and terrestrial environment,). To do so, optoelectronic devices/equipment coupled to the cable of the DAS system may detect, and process reflected light signals (e.g., Rayleigh backscatter signals or simply Rayleigh signal) over a distance (range) in the DAS sensing environment.

Generally, a DAS system may include a cable station equipped with a DAS Interrogator Unit (IU) that typically includes a DAS transmitter and receiver to probe a fiber optic cable using a coherent laser pulse, where changes in the phase of the returning optical backscattered signal are measured. Optical phase shift between the received backscattered pulses may be proportional to strain in the fiber, leading to the ability to detect vibrations and the like, as measured by the effect of such perturbations on the phase. For example, a DAS system may be based on Rayleigh back scattering also referred to as a Rayleigh-scattering-based DAS system in prior art.

To date, this DAS distributed sensing is limited to fiber lengths in the range of approximately 50-100 km for commercially available systems. Although the first fiber span adjacent to the DAS Interrogator Unit (IU) (a DAS transmitter and receiver) can be sensed in a repeatered system with Erbium doped fiber amplifiers (EDFA), currently no equipment can sense multi-span links with in-line amplifiers.

DAS sensing schemes have been proposed for multi-span systems. In one approach, where different spans are sensed according to a wavelength associated with a given span, optical bandpass filters are required to select the only wavelength of interest for a given span for a reflection back to the reverse direction. This requirement makes the undersea optical path a lot more expensive and very hard to store backup units since almost all repeaters are unique.

In particular, DAS sensing systems may be based upon Optical Time Division Reflectometry (OTDR), where at present in a repeatered system that is equipped with EDFAs, only the first span adjacent to a DAS Interrogator Unit (IU) can be sensed. In other words, a Rayleigh backscattered signal generated at a location more remote from the DAS IU than a given EDFA can't be transmitted back though subsea EDFA, since isolators are used in EDFA output or input or both. These isolators restrict the direction of optical signals to be unidirectional.

To sense the spans located after any EDFA, an optical loopback path is indispensable to route the Rayleigh signal back to the reverse optical path. A so-called High-loss loopback (HLLB) represents one implementation of a loopback path to route a Rayleigh backscatter signal back to a DAS IU, but this approach generates very high loss. For example, the loss is ~32dB using a reflective grating or ~54 dB for Rayleigh back-scattering. To improve the loopback design, one approach has been to provide with a loopback amplifier and filter (Amplified-Filtered Loopback, AFLB) to only pick up the sensing channel.

Another challenge with respect to long distance (greater distance than say, one span) DAS sensing is the ability to sense multiple spans without the loss of acoustic frequency coverage. The acoustic frequency coverage of a single DAS IU is inversely proportional to the length of the particular sensing segment. For example, in principle only < 5Hz acoustic frequency can be sensed if a 10,000 km link is sensed with a single DAS IU. Thus, acoustic perturbations taking place at tens of Hertz or hundreds of Hertz cannot be sensed over such a long link. Therefore, a recent approach has proposed to partition a long link into multiple segments, where each segment (such as a single span, on the order of 50km-100 km in length, or several spans) is covered by a different DAS IU with a different wavelength. In this case, only the corresponding DAS IU wavelength is allowed to travel back to the reverse path for a given segment. Hence, an optical bandpass filter specific to a given DAS IU needs to be implemented in the loopback path for a given loopback associated with the given DAS IU. In the extreme case, each span is covered by a single DAS IU and each loopback path has to be different (different optical filters to let only the wavelength corresponding to the DAS IU covering this particular span to send back to the reverse path). With this configuration the maximum acoustic frequency coverage is achieved. As an example, in an optical communication/sensing system having 200 spans, 200 DAS IUs (all implemented at mutually different wavelengths from one another) and 200 loopback paths with different bandpass filters are needed in order to get the maximum acoustic frequency coverage.

To implement such a DAS configuration with a different DAS IU and loopback filter for each span (such as 200 spans), the hardware for DAS IU and loopbacks will increase dramatically, and will make it impractical to stock spare units (both DAS IU and loopback path components). Another drawback of this scheme is that the DAS IU power usage is very low. The DAS wavelength covering the very last span needs to be propagated through all leading EDFAs, but not being used for sensing only at the very last span. The DAS wavelength covering the first span still consumes optical power in the downstream EDFAs. If all DAS channels are allowed to transmit to the back of a link, the useful power for sensing is only 0.5% for each DAS channel if there are 200 IUs co-existing in the link. In principle, if the DAS channels that have finished sensing are dropped from the link, the power usage could be increased, but such a system needs to be carefully designed, since the remaining channel power may be too strong to generate nonlinearities to degrade the sensing sensitivity. Moreover, a DAS signal experiences fading, which fading may make the Rayleigh backscattering signal totally disappear for some wavelength at some time.

It is with reference to these, and other considerations that the present disclosure is provided.

### Brief Summary

In one embodiment, a receiver system for distributed acoustic sensing (DAS) is provided. The receiver system may include a separating component to receive a reflected signal, distributed over a plurality of wavelengths, and to separate the reflected signal according to wavelength into a plurality of optical signals. The receiver system may further include a plurality of coherent mixer component to mix the plurality of optical signals with a given local oscillator signal at the respective plurality of wavelengths into a plurality of mixed optical signals; a plurality of photodetector to receive the plurality of mixed optical signals and convert the plurality of mixed optical signals into a plurality of electrical signals, respectively; an analog to digital converter (ADC) assembly comprising a plurality of ADCs, wherein a first ADC of the plurality of ADCs is to sample a first electrical signal of the plurality of electrical signals, and output the electrical signal as a digital signal, wherein the digital signal is associated with a given wavelength of the plurality of wavelengths. The receive system may also include a clock to send a clock signal to the first ADC to determine a sampling instance for the first ADC, wherein the sampling instance of the first ADC is separated from a sampling instance of a second ADC by a determined delay increment; and a digital signal processing (DSP) block, wherein the DSP block is configured to process the digital signal, wherein the digital signal, associated with the given wavelength, is rearranged to indicate a location associated with a disturbance that generates a component of the reflected signal.

In another embodiment, a method is provided for distributed acoustic sensing (DAS). The method may include receiving a reflected signal, over a plurality of channels corresponding to a plurality of wavelengths, respectively; separating the reflected signal according to wavelength into a plurality of optical signals; and mixing the plurality of optical signals with a given local oscillator signal at the respective plurality of wavelengths into a plurality of mixed optical signals. The method may further include converting the plurality of mixed optical signals into a plurality of analog electrical signals, respectively; and sending a plurality of clock signals at a plurality of sampling instance for sampling the plurality of analog electrical signals, wherein the plurality of sampling instances are separated from one another by a determined delay increment. The method may also include: at the plurality of sampling instances, converting the plurality of analog electrical signals into a plurality of digital signals, respectively; and processing the plurality of digital signals at the plurality of sampling instances, wherein a given digital signal of the plurality of digital signals, corresponding to a given digital signal processing (DSP) block, wherein the DSP block is configured to process the digital signal, wherein the digital signal, associated with the given wavelength of the plurality of wavelengths, is rearranged to indicate a location associated with a disturbance that generates a component of the reflected signal.

In another embodiment, a receiver system for distributed acoustic sensing (DAS) is provided. The receiver system may include a separating component to receive a reflected signal, the reflected signal comprising a frequency chirp-modulated signal that is distributed over a plurality of wavelengths, and to separate the reflected signal according to wavelength into a plurality of optical signals; a plurality of coherent mixer component to mix the plurality of optical signals with a given local oscillator signal at the respective plurality of wavelengths, into a plurality of mixed optical signals; and a photodetector array to receive the plurality of mixed optical signals and convert the plurality of mixed optical signals into a plurality of electrical signals, respectively. The receiver system may also include an analog to digital converter (ADC) assembly comprising a plurality of ADCs, wherein the ADC assembly is configured to process the plurality of electrical signals concurrently, and output the plurality of electrical signals as a plurality of digital signals; and a digital signal processing (DSP) block, wherein the DSP block is configured to receive the plurality of digital signals concurrently and to process the plurality of digital signals to convert the plurality of digital signals into phase data associated with the plurality of wavelengths, respectively.

In a further embodiment, a distributed acoustic sensing (DAS) system is provided. The DAS system may include a transmitter, the transmitter comprising: a multi-tone source to generate a sensing signal over a plurality of wavelengths; and a modulator assembly, to perform a frequency modulation of the sensing signal over the plurality of wavelengths to generate a frequency chirp modulated signal. The DAS system may also include a receiver, to receive a reflected signal, derived from the sensing signal, wherein the reflected signal comprises a plurality of optical signals distributed over the plurality of wavelengths, wherein the receiver is configured to beat the frequency chirp modulated signal with the reflected signal to generate a plurality of output signals, wherein a frequency of an output signal provides a measure of a location of a disturbance generating a given optical signal at a given wavelength of the plurality of wavelengths.

In a further embodiment, a method for distributed acoustic sensing (DAS) may include receiving a reflected signal, over a plurality of channels corresponding to a plurality of wavelengths, respectively; separating the reflected signal according to wavelength into a plurality of optical signals; and mixing the plurality of optical signals with a plurality of local oscillator signals at the respective plurality of wavelengths into a plurality of mixed optical signals. The method may also include converting the plurality of mixed optical signals into a plurality of analog electrical signals, respectively; converting the plurality of analog electrical signals concurrently into a plurality of digital signals; and receiving the plurality of digital signals concurrently, and processing the plurality of digital signals to convert the plurality of digital signals into phase data associated with the plurality of wavelengths, respectively.

In an additional embodiment, a multi-span distributed acoustic sensing (DAS) system is provided. The multi-span DAS system may include a DAS transmitter, operative to transmit an optical sensing signal over an outbound path, the optical sensing signal comprising a plurality of wavelengths; and an optical cable, arranged over a plurality of spans to conduct the optical sensing signal along the outbound path, a given span of the plurality of spans extending for a distance of 10 kilometers or more. The multi-span DAS system may include a plurality of loopbacks, distributed over the plurality of spans, the plurality of loopbacks arranged to conduct a Rayleigh backscattered signal to a return path, wherein the Rayleigh backscattered signal is derived from the optical signal; and a receiver, to receive the Rayleigh backscattered signal, and to process the Rayleigh backscattered signal, wherein a time delay is applied to an electrical signal derived from the Rayleigh backscattered signal according to a wavelength of the Rayleigh backscattered signal.

In yet another embodiment, a method of distributed acoustic sensing (DAS) may include transmitting an optical sensing signal over an outbound path, the optical sensing signal comprising a plurality of wavelengths, distributed over a plurality of channels; conducting the optical signal over a plurality of spans, a given span of the plurality of spans extending for a distance of 10 kilometers or more; and providing a plurality of loopbacks over the plurality of spans, the plurality of loopbacks arranged to conduct a Rayleigh backscattered signal that is derived from the optical signal, from the outbound path to a return path, over the plurality of wavelengths. The method may also include receiving the Rayleigh backscattered signal over the plurality of wavelengths at a termination of the return path; and processing the Rayleigh backscattered signal, by applying a time delay for processing a given electrical signal derived from a given wavelength of the Rayleigh backscattered signal, in accordance with the given wavelength.

In an additional embodiment, a multi-span distributed acoustic sensing (DAS) system is provided. The multi-span DAS system may include a first DAS transmitter, operative to transmit a first optical sensing signal over a first path, the first optical sensing signal comprising a plurality of wavelengths; a second DAS transmitter, operative to transmit a second optical sensing signal over a second path, the second optical sensing signal comprising a plurality of wavelengths; and an optical cable, arranged over a plurality of spans to conduct the first optical sensing signal and the second optical sensing signal, a given span of the plurality of spans extending for a distance of 10 kilometers or more. The multis-span DAS system may include a plurality of repeaters, distributed over the plurality of spans, wherein a given repeater of the plurality of repeaters comprises a pair of loopbacks, wherein a first loopback of the pair of loopbacks in a given repeater is arranged to conduct a first Rayleigh backscattered signal to the second path, wherein the first Rayleigh backscattered signal is derived from the first optical sensing signal, wherein a second loopback of the pair of loopbacks in a given repeater is arranged to conduct a second Rayleigh backscattered signal to the first path, wherein the second Rayleigh backscattered signal is derived from the second optical sensing signal. The multi-span DAS system may further include a first receiver, collocated with the first DAS transmitter, and arranged to receive the first Rayleigh backscattered signal, and to process the first Rayleigh backscattered signal, wherein a time delay is applied to a first electrical signal derived from the first Rayleigh backscattered signal according to a wavelength of the first Rayleigh backscattered signal, and a second receiver, collocated with the second DAS transmitter, and arranged to receive the second Rayleigh backscattered signal, and to process the second Rayleigh backscattered signal, wherein a time delay is applied to a second electrical signal derived from the second Rayleigh backscattered signal according to a wavelength of the second Rayleigh backscattered signal.

In a further embodiment, a method of multi-span DAS sensing is provided. The method may include: transmitting a first optical sensing signal over a first path from a first DAS transmitter, the first optical sensing signal comprising a plurality of wavelengths; transmitting a second optical sensing signal over a second path from a second DAS transmitter, the second optical sensing signal comprising a plurality of wavelengths; and conducting the first optical sensing signal and the second optical sensing signal over an optical cable, arranged over a plurality of spans, a given span of the plurality of spans extending for a distance of 10 kilometers or more. The method may also include providing a plurality of repeaters, distributed over the plurality of spans, wherein a given repeater of the plurality of repeaters comprises a pair of loopbacks, wherein a first loopback of the pair of loopbacks in a given repeater is arranged to conduct a first Rayleigh backscattered signal to the second path, wherein the first Rayleigh backscattered signal is derived from the first optical sensing signal, wherein a second loopback of the pair of loopbacks in a given repeater is arranged to conduct a second Rayleigh backscattered signal to the first path, and wherein the second Rayleigh backscattered signal is derived from the second optical sensing signal. The method may also include receiving the first Rayleigh backscattered signal at a first receiver, collocated with the first DAS transmitter; applying a first time delay to a first electrical signal derived from the first Rayleigh backscattered signal according to a wavelength associated with a first channel of the first electrical signal, and applying a second time delay to a second electrical signal derived from the second Rayleigh backscattered signal according to a wavelength associated with a second channel of the second electrical signal.

### Brief Description of the Drawings

**FIG. 1** illustrates an example of a DAS system, according to embodiments of the disclosure;
**FIG. 2** depicts details of a variant of a receiver system, according to some embodiments of the disclosure;
**FIG. 3** shows an example of sensing a 1 kHz sine wave (representing a perturbation) with 200 synchronized sensing channels;
**FIG. 4** depicts details of another variant of a receiver system, according to some embodiments of the disclosure;
**FIG. 5** shows an example of sensing a 5 Hz sine wave with 200 synchronized sensing channels;
**FIG. 6** depicts details of a further variant of a receiver system, according to some embodiments of the disclosure;
**FIG. 7A** depicts an exemplary optical spectrum (optical power vs wavelength) of such a multi-tone source;
**FIG. 7B** and **FIG. 7C** depict two different embodiments of an OFDR transmitter;
**FIG. 8** shows an embodiment of an undersea multi-span optical system; and
**FIG. 9** shows another embodiment of another undersea multi-span optical system.

### Description of Embodiments

The present embodiments will now be described more fully hereinafter with reference to the accompanying drawing figures, in which exemplary embodiments are shown. The scope of the embodiments should not be construed as limited to the embodiments set forth herein. Rather, these embodiments are provided so that this disclosure will be thorough and complete, and will fully convey the scope of the embodiments to those skilled in the art. In the drawings, like numbers refer to like elements throughout.

Before detailing specific embodiments with respect to the figures, general features with respect to the embodiments will be reviewed. Novel DAS apparatus, systems, architecture, and techniques are provided to improve DAS sensing capability, in particular, sensitivity and range across multiple spans of a subsea system including above ground and underground optical cables.

The present embodiments provide architecture and methods for DAS sensing that achieve multi-span sensing that is suitable to cover a long subsea link (e.g., >10,000 km) with all identical repeaters, but without sacrificing acoustic frequency range (>1kHz can be easily achieved). The present embodiments in particular may address the aforementioned issues with known DAS approaches, and may be used to balance sensing sensitivity and acoustic frequency range, which may refer to the detectable acoustic frequency range.

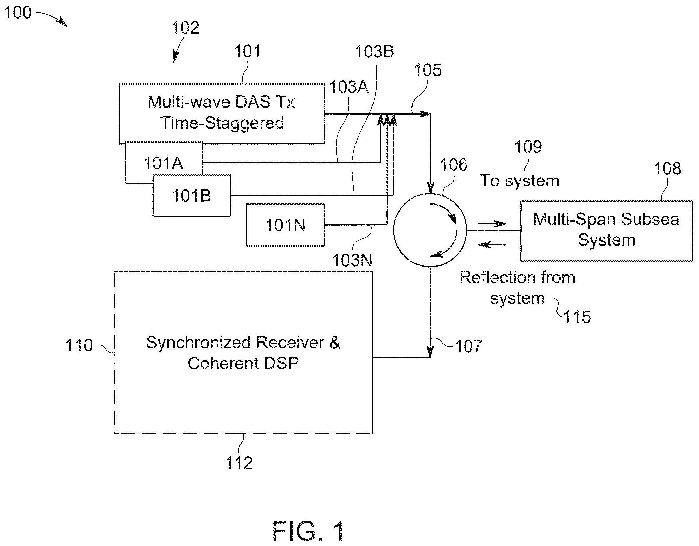

Referring to **FIG. 1****,** the system 100 may include a DAS transmitting component side 102 having a single DAS transmitter, shown as transmitter 101, an optional circulator, shown as circulator component 106, and a receiver system 110, where the receiver system 110 includes a synchronized receiver and a coherent digital signal processor (DSP). The circulator component 106 may be omitted in the case where Rayleigh scattering from a system is coupled back to the fiber going the reverse direction. Operation of a synchronized receiver is detailed with respect to embodiments to follow. These components may be communicatively coupled to a DAS subsea system, shown as multi-span subsea system 108. The multi-span subsea system 108 may include one or more optical fibers that may be configured to receive one or more sensing signals 103 from the DAS transmitting side 102 of the system 100 and transmit one or more backscattered or reflected sensing signals 115 to the receiving side 112 of the system 100.

The transmitter 101 may be configured to generate and transmit one or more sensing optical sensing signals 103 to determine a status of a particular segment, portion and/or span of an optical communication path of the multi-span subsea system 108, where the multi-span subsea system 108 may include one or more of such spans. The optical sensing signals 103 may be transmitted in a time-staggered manner, e.g., at predetermined time intervals, one after the other, etc. and/or using a predetermined schedule. The signals (and/or each signal transmitted at a specific time interval) may be transmitted using a multiple wavelength source or with a tunable laser using a predetermined wavelength and/or wavelengths, and/or predetermined frequency/ies (e.g., 1 pm/s (125 MHz/s) to 1000 nm/s (125 THz/s), and/or any other frequencies. The wavelength(s)/frequenc(ies) of optical sensing signals 103 generated by the transmitter 101 may be same and/or different.

More particularly, as shown in the embodiment of FIG. 1, the DAS transmitting side 102 may include one or more DAS transmitters 101 (a, b, ..., n). Each transmitter 101 may be configured to generate and transmit a respective optical sensing signal 103 (a, b, ..., n) at a predetermined wavelength. For example, the transmitter 101A may be configured to generate and transmit optical sensing signal 103A having wavelength λ₁; the transmitter 101B may be configured to generate and transmit optical sensing signal 103B having wavelength λ₂; and the transmitter 101N may be configured to generate and transmit optical sensing signal 103N having wavelength λₙ. The wavelength of optical sensing signals 103 generated by the respective transmitters 101 may be same and/or different. Each transmitter 101 may be configured to generate and transmit optical sensing signals 103 to determine a status of a particular segment, portion and/or span of an optical communication path of the multi-span subsea system, where the system may include one or more of such spans.

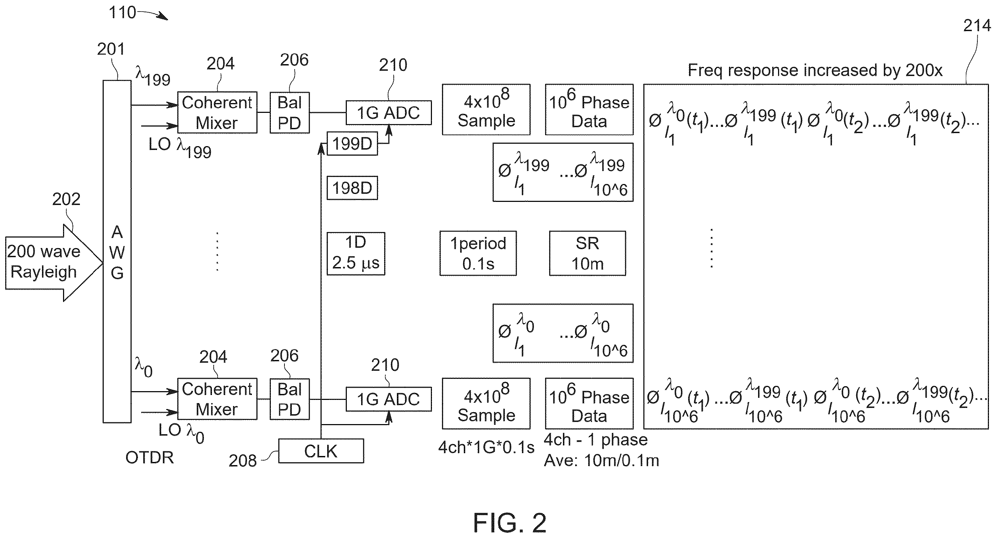

According to some embodiments of the disclosure, **FIG. 2** depicts details of a variant of the receiver system 110. In this example, the receiver system 200 includes a coherent mixer 204, photodetector (PD 206), and clock 208. The receiver system 200 further includes an analog to digital converter (ADC) 210 and digital signal processing (DSP) block 214. In operation, the receiver system 110 may function to process signals transmitted at a plurality of wavelengths from the transmitter(s) 101, described above. In the scenario depicted in FIG. 2, the receiver system 110 may act to process optical signals derived from signals sent from the transmitters 101 at a plurality of different wavelengths. Thus, the FIG. 2 in part depicts a flow of data or information as processed from signals received at a variety of different wavelengths. For purposes of illustration, and in one non-limiting embodiment, it may be assumed that a set of optical signals, shown as optical signals 202, represent a set of 200 different backscattered signals that are derived from transmitted signals launched from 200 different DAS transmitters. For clarity of explanation, in examples to follow, a backscattered signal being detected for the purposes of DAS sensing may be a Rayleigh backscattered signal. However, in other embodiments, other type of backscattered signals may be employed for DAS sensing, such as Brillouin scattering an Raman scattering. In some non-limiting embodiments, the different Rayleigh backscattered signals may be derived from reflections that take place at different locations along a DAS system. In some examples, the DAS system may be a part of a multi-span subsea system 108, depicted in FIG. 1. In some examples, the DAS system that is the original source of the optical signals 202 may operate as a stand-alone sensing system or may be integrated within a multi-span subsea system used for optical communications. In the latter circumstance, it may be understood that such an integrated DAS system may occupy 1 or 2 fiber pairs of an optical cable of an optical communications system, for example.

For further purposes of illustration, in one example, the receiver system 110 may be assumed to be coupled to a multi-span optical system that is part of a DAS system for sensing 200 spans (50-km each), where each span is covered by a unique wavelength (λ₁ to λ₂₀₀); and a 1 kHz sine wave is being detected.

When the optical signals 202 reach the receiver system 110, the 200 different wavelengths (the term "wavelength" may be used herein to refer to an optical signal that is transmitted at a given wavelength) may be separated by a separating component 201, such as an arrayed waveguided grating (AWG) or cascaded optical filters.

The 200-sensing-wavelength signal is first separated to 200 parallel paths by an arrayed waveguide grating (AWG) or cascaded optical filters. The separated signals, shown as λ₀ to λ₁₉₉, may then be mixed with corresponding local oscillators (LOs) provided to receiver system 110, from a DAS transmitter, as discussed below. The LOs (shown as LO λ₀ to LO λ₁₉₉ ) have the same corresponding frequency as the respective separated sensing wavelengths and may be mixed in a coherent mixer 204 (e.g., an optical 90⁰ hybrid). In accordance with embodiments of the disclosure, a coherent mixer may have 1 to 4 outputs (1 for single polarization single quadrature demodulation, 2 for dual polarization demodulation, and 4 for full coherent demodulation of dual polarization quadrature signals). As depicted in FIG. 2, these outputs from the coherent mixer 204 are sent as mixed optical signals for conversion to analog electrical signals. In one example, this conversion may be accomplished by balanced photodetectors, shown as PD 206. The analog electrical signals output from PDs 206 are sampled by parallel analog-to-digital converters (ADCs), shown as ADC 210, so that the sampling of each wavelength is synchronized and staggered in time with respect to sampling of other wavelengths. The delay between different signals based upon the 200 different wavelengths may be incremented based upon a delay increment between adjacent wavelengths or channels, (in FIG. 2, 0D to 199D with 1D=2.5µs for 50-km spans). As an example, for a 4-output coherent mixer and ADCs with 1 GHz sampling rate, the data size is 4*1GS/s*0.1s or 4x10⁸ samples in 0.1s (the round-trip time of a signal traveling through a 10,000 km link).

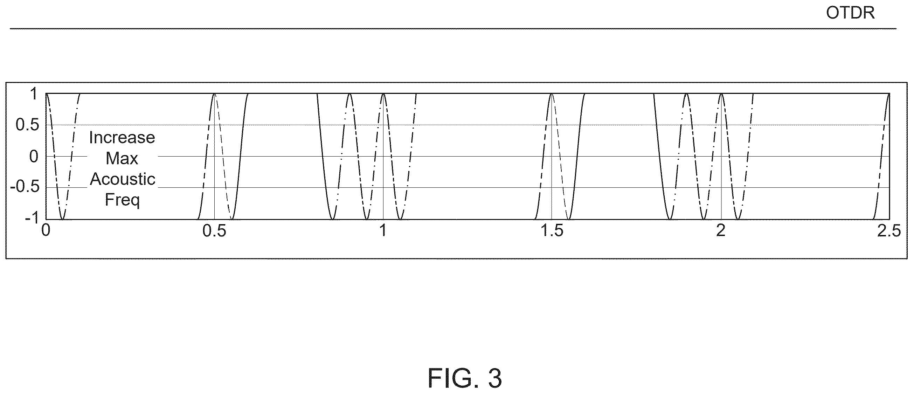

In the receiver system 110, a DSP block 214 is provided to process the time domain voltage data to achieve phase information of the optical link for each corresponding optical channel. In the DSP block 214, the optical phase may be integrated in a distance equivalent spatial resolution (10m), and the data size may be reduced down to 10⁶ samples over a 0.1s interval. For further processing, the data arranged by wavelength is rearranged by location as shown in FIG. 2. The data for sensor 1 is denoted as ${∅}_{{l}_{1}}^{{λ}_{0}} \left({t}_{1}\right) … {∅}_{{l}_{1}}^{{λ}_{199}} \left({t}_{1}\right) {∅}_{{l}_{1}}^{{λ}_{0}} \left({t}_{2}\right) … {∅}_{{l}_{1}}^{{λ}_{199}} \left({t}_{2}\right)$ ... in FIG. 2. Please note the t₁ in ${∅}_{{l}_{1}}^{{λ}_{0}} \left({t}_{1}\right) … {∅}_{{l}_{1}}^{{λ}_{199}} \left({t}_{1}\right)$ are staggered in time as shown in FIG. 2 and FIG. 3, discussed below.

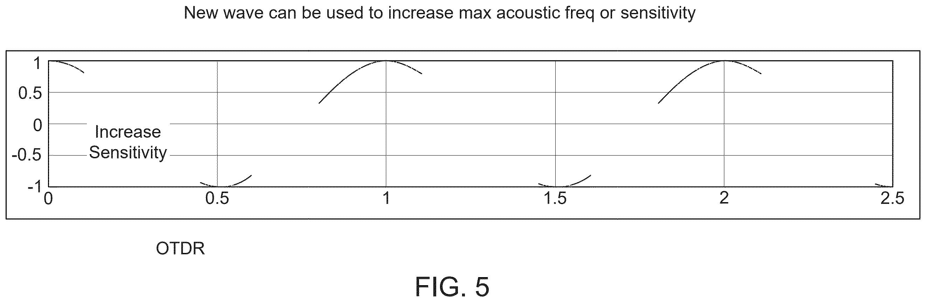

Note that, contrary to the embodiment of a receiver system of FIG. 2, if all 200 channels (corresponding to the different wavelengths) are detected and processed independently, the maximum acoustic frequency range is only 5 Hz. When the sampling instances for the 200 channels in the receiver are staggered, each optical wavelength or channel will sample a different portion of an acoustic frequency wave, such as a sine wave. **FIG. 3** shows an example of sensing a 1 kHz sine wave (representing a perturbation) with M=200 synchronized sensing channels. In particular, FIG. 3 (as well as FIG. 5 to follow) depict the recovered acoustic signal as a function of time representative of the acoustic signal generated at a specific location. Thus, the acoustic information is built from an optical wave1, optical wave 2, optical wave 3, and so forth.

Thanks to the time-staggering process, the sampling rate is equivalently increased by 200x time; hence the sensing frequency range for acoustic signals is increased from 5 Hz obtainable in a non-time staggered system to 200x5=1000 Hz, achievable in the illustrated embodiment.

While the receiver system 110 is shown in FIG. 2 in the context of sensing 200 different signals at 200 different wavelengths, more generally, the receiver system 110 may be arranged for detecting any suitable number of different optical signals at different wavelengths in a time-staggered manner, such as 20 signals, 50 signals, 100 signals, and so forth. Thus, the receiver system 110 provides a manner for sensing acoustic type disturbances at a relatively higher sensing frequency, with practical implementations of sensing frequency as high as 1 kHz for a 200 span system. In other words, using the embodiment of FIG. 2, DAS sensing can provide span-specific detection capability over a 200-span system for perturbances of frequencies up to at least 1 kHz.

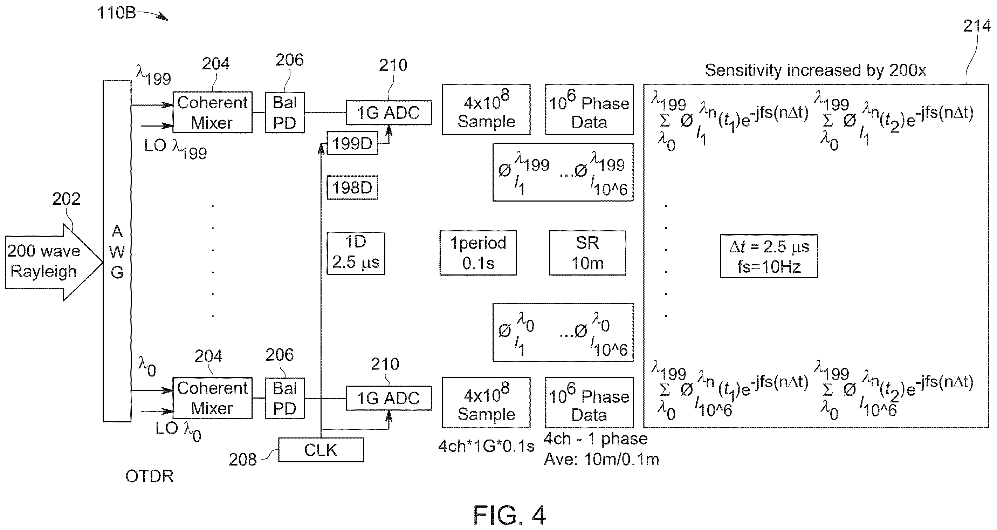

**FIG. 4** illustrates another implementation of a receiver system 110B, where the receiver system 110B may be similar to receiver system 110, with like components labeled the same. In the scenario of FIG. 4, the receiver system 110B is implemented in a manner to increase sensing sensitivity, and combat Rayleigh fading effects. The embodiment of receiver system 110B may be especially suitable in cases where the capability to detect a relatively larger acoustic frequency range is not important.

In the scenario of FIG. 4, it may be assumed that optical signals are received over 200 synchronized sensing channels as in FIG. 2, and processed using coherent mixer 204, PDs 206, clock 208, and ADCs 210 in a similar fashion to the scenario of FIG. 2. In this example, in the DSP block 214, the data for sensor 1 is denoted as ${\sum }_{{λ}_{0}}^{{λ}_{199}} {∅}_{{l}_{1}}^{{λ}_{n}} \left({t}_{1}\right) {e}^{- {jf}_{s} \left(nΔt\right)} {\sum }_{{λ}_{0}}^{{λ}_{199}} {∅}_{{l}_{1}}^{{λ}_{n}} \left({t}_{2}\right) {e}^{- {jf}_{s} \left(nΔt\right)}$. The data arranged by wavelength is rearranged by location. The summation of all wavelengths in this example is implemented with a phase delay for each wavelength that is determined by the electrical delay introduced during the ADC sampling cycle.

**FIG. 5** shows an example of sensing a 5 Hz sine wave with N=200 synchronized sensing channels. More generally, by time-shifting and summation (or averaging) the data from N independent receivers, the sensing signal-to-noise ratio (SNR) and sensitivity can be increased by N times. Furthermore, the signal fading effects can be reduced significantly with wavelength average.

Note that in the scenario of FIG. 4, the electrical signals are sampled by parallel ADCs with different delays being implemented for different wavelengths. If the delays in FIG. 4 can be programed and all set to 0, then the summation or average process: ${\sum }_{{λ}_{0}}^{{λ}_{199}} {∅}_{{l}_{1}}^{{λ}_{n}} \left({t}_{1}\right) {e}^{- {jf}_{s} \left(nΔt\right)} {\sum }_{{λ}_{0}}^{{λ}_{199}} {∅}_{{l}_{1}}^{{λ}_{n}} \left({t}_{2}\right) {e}^{- {jf}_{s} \left(nΔt\right)}$ can be simplified as: ${\sum }_{{λ}_{0}}^{{λ}_{199}} {∅}_{{l}_{1}}^{{λ}_{n}} \left({t}_{1}\right) {\sum }_{{λ}_{0}}^{{λ}_{199}} {∅}_{{l}_{1}}^{{λ}_{n}} \left({t}_{2}\right) .$

In different embodiments, the sensing frequency range and sensing sensitivity may be balanced one against the other, in order to reach an optimum sensitivity for a required acoustic frequency response. For the same example discussed above with respect to FIGs. 2-5, (200 spans x 50-km/span), in one non-limiting embodiment, the 200 wavelengths may be divided into 10 x20 groups if the required acoustic frequency range is 100Hz. This notation means that M=20 different wavelengths as a group are processed in a coherent manner as outlined in FIG. 2 and FIG. 3, to increase the frequency response from 5Hz to 100Hz. The resulting N=10 groups from the above process can be processed further as outlined in FIG. 4 and FIG. 5 to increase the sensitivity by 10 times.

In other embodiments of the disclosure, a synchronized receiver is provided with a DSP component for DAS sensing based upon optical frequency domain reflectometry (OFDR). By way of explanation, in an OFDR system, at a transmitter, a CW laser generating a narrow linewidth is periodically modulated in frequency using a linear chirp, while the instantaneous amplitude or power keeps constant. In an OFDR receiver, heterodyne detection is typically implemented to 'beat' a LO (chirped modulated) with the signals that are backscattered from a sensing span (such as a Rayleigh backscattered signal), where those backscattered signals are based upon the signals sent from the transmitter at earlier instances. The distance between the position on a fiber segment relative to a DAS IU (transmitter) is proportional to the beating frequency. Traditionally, OFDR is used for µm to cm spatial resolution (SR) sensing, and the sensing distance is short (ranging from the integrated device level to a few meters) to avoid the handling of excessively large amounts of data. Recently, however, reports have demonstrated ~100 km sensing range capability using the OFDR technique.

In these additional embodiments of the disclosure, a Wavelength / Frequency multiplexing technique combined with a synchronized receiver, and coherent DSP is applied to remedy the otherwise compromised sensitivity resulting from higher acoustic frequency coverage.

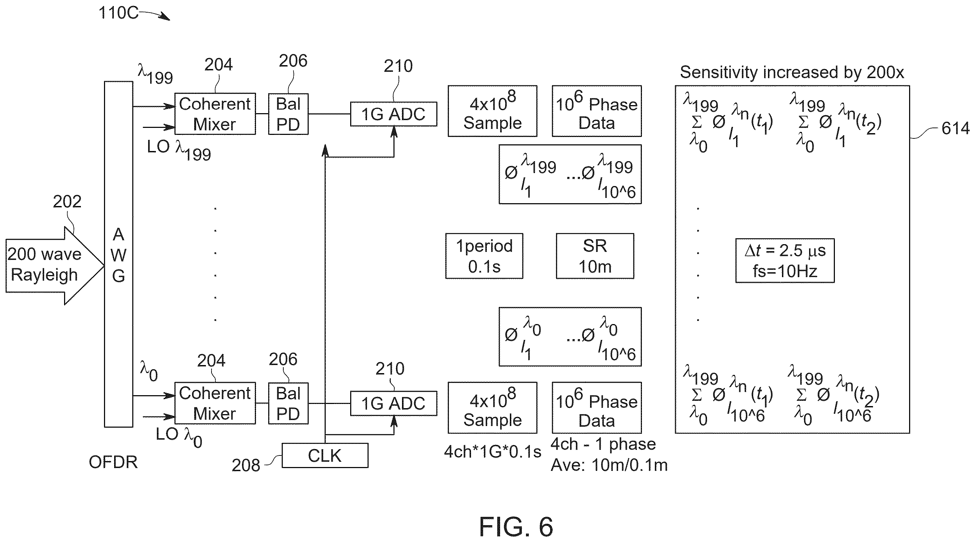

**FIG. 6** illustrates a receiver system 110B that implements this approach, where the scenario depicted in FIG. 6 assumes 200 OFDR channels. As with the embodiment of FIG. 4, the receiver system 110B may include many of the same components, where like components are labeled the same, and many function in a similar manner, unless otherwise noted. One difference between the action of receiver system 110B and receiver system 110C in FIG. 6, is that the signals received from the different PDs at all ADCs 210 are synchronously digitized and sampled without any delay. In this embodiment, the LOs (from λ₁ to λ₂₀₀) are a copy (have the same signal chirp) of the LO after frequency chirp modulation from the transmitter. The data arranged by wavelength is rearranged by location as shown in FIG. 6. The data for sensor 1 is denoted as ${\sum }_{{λ}_{0}}^{{λ}_{199}} {∅}_{{l}_{1}}^{{λ}_{n}} \left({t}_{1}\right) {\sum }_{{λ}_{0}}^{{λ}_{199}} {∅}_{{l}_{1}}^{{λ}_{n}} \left({t}_{2}\right)$.

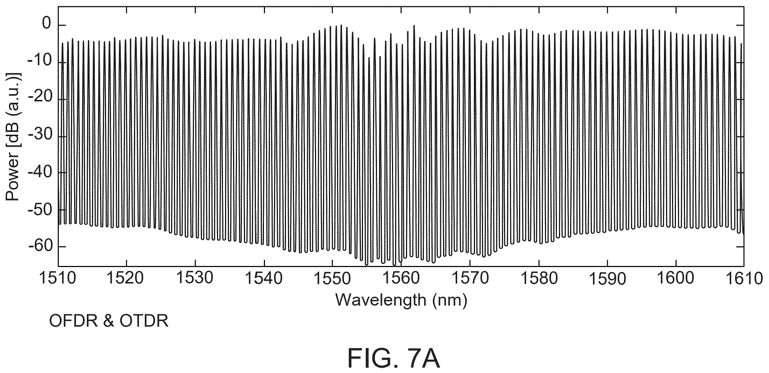

In accordance with embodiments of the disclosure, the receiver system 110B may be implemented in conjunction with a DAS transmitter that employs a multi-tone source, which source provides an efficient transmitter for this scheme. **FIG. 7A** depicts an exemplary optical spectrum (optical power vs wavelength) of such a source with >100 nm optical bandwidth, in this case spanning a range at least between 1510 nm and 1610 nm.

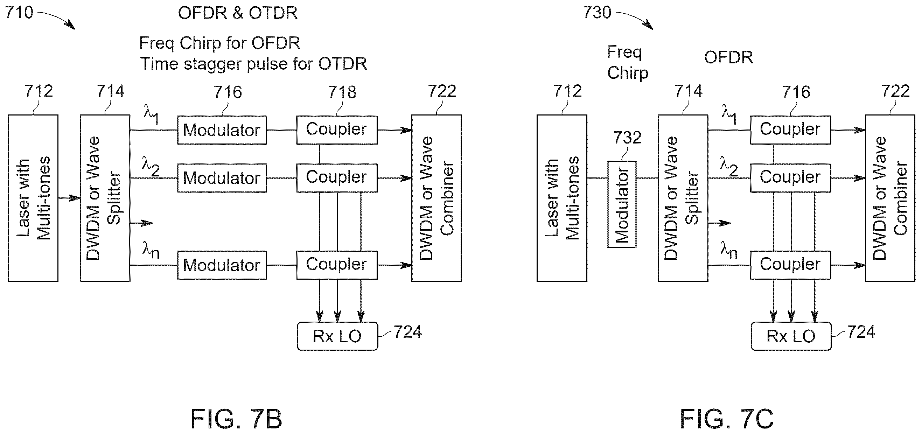

**FIG. 7B** and **FIG. 7C** depict two different embodiments of a transmitter suitable for OFDR measurement. In the transmitter 710 of FIG. 7B (which transmitter is also suitable for OTDR), different optical channels are modulated separately after optical demultiplexing using DWDM or a wave splitter if the optical bandwidth of modulators is not wide enough. As shown in FIG 7B, a laser source 712 is provided, with multitones as discussed above. The signals output by the laser source 712 are received at the demultiplexing component 714, and then output at the respective wavelengths λ₁ to λₙ, to respective modulators, shown as modulators 716, which modulator are driven by a pre-determined frequency chirp for OFDR or a time-staggered pulse for OTDR. The output of each of the modulators 716 is received at couplers 718 that form a coupler assembly, and transmitted for the receiver local oscillator 724 and to the wave combiner 722.

In the alternative embodiment of a transmitter 730 in FIG. 7C, the output from the laser source 712 at all channels is modulated using a single modulator (which modulator is driven by a pre-determined frequency chirp), shown as modulator 732, which transmits a modulated signal to the demultiplexing component 714, which component outputs the modulated signals at the different wavelengths to respective ones of the couplers 718, and then to receiver local oscillator 724 and wave combiner 722.

Note that while the transmitter 730 is suitable for OFDR sensing with frequency chirp, the transmitter 710 may be implemented for OTDR sensing as well as OFDR sensing. In the case of OFDR, frequency chirping is applied as noted, while in the case of OTDR time staggering pulses are applied.

In a synchronized OFDR receiver, the chirp modulated OFDR signal sent from the transmitter beats with a Rayleigh backscatter signal that is received from different locations along a link, and the resulting frequency provides the measure of the distance from the Rayleigh reflection point to the transmitter, and thus a given frequency is characteristic of a given location. By measuring the power of the signal at this given beating frequency, the acoustic perturbation at the given location can be measured.

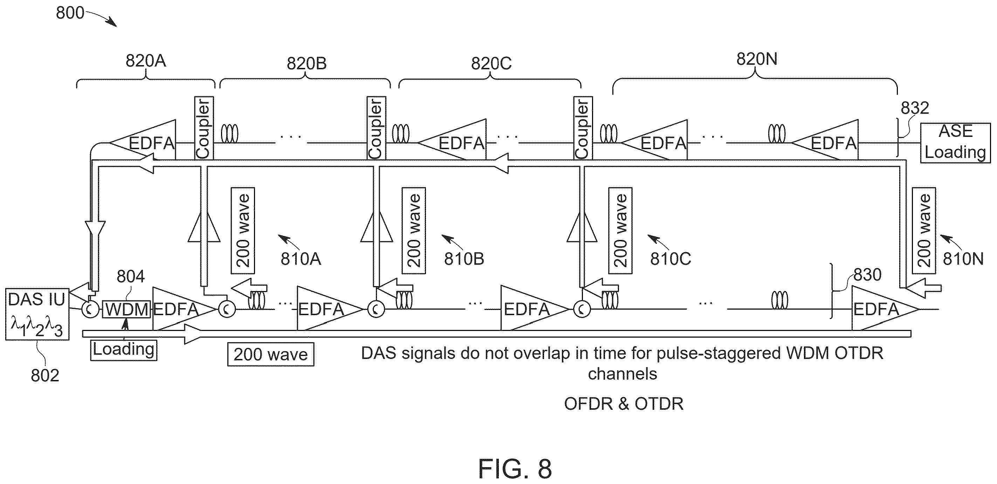

Using wavelength / frequency multiplexing technology (both OTDR or OFDR type), in further embodiments, an undersea DAS sensing system can be implemented with a uniform undersea design. **FIG. 8** shows an implementation of such an undersea system 800. In the undersea system 800, in one implantation, it may be assumed that DAS sensing takes place over a multi-span range for just a single outbound sensing signal direction (west to east in the figure), where the reverse direction (to carry Rayleigh backscattered signal back to the termination station) is loaded with amplified spontaneous emission (ASE) noise to make the inline EDFAs operating in the right regime. In the particular system depicted, a DAS transmitter 802 is operative to transmit signals over the outbound path 830 at multiple wavelengths as discussed in the aforementioned embodiments. A series of spans, shown as spans 820A, 820B, 820C 820N, are provided, as well as a series of loopbacks, shown as loopbacks 810A, 810B, 810C 810N (collectively, loopbacks 800), to route the Rayleigh backscattered signals over the return path 832. EDFAs are provided on both outbound path 830 and return path 832. As noted in FIG. 8, for wavelength division multiplexed OTDR channels that are pulse staggered, the generated DAS signals do not overlap in time.

In alternative implementations, a bi-directional DAS sensing system may be implemented with similar architecture to undersea system 800 by replacing the ASE loading with a similar DAS IU to the DAS transmitter 802. In the configuration of undersea system 800, it may be assumed that the loopbacks 810 are associated with respective repeaters (not separately shown), where inside a given repeater, there is just one loopback path for a single direction sensing. Optical filters are not needed in the s undersea system 800, since all 200 wavelengths are sent back to the transmitter/receiver from all inline repeaters. A given EDFA is used to boost the weak Rayleigh backscattered signal. Please note that for the undersea system 800 there is no interference among λ₁ added at different repeaters, because there is no pulse overlap in variants based upon OTDR, and in variants based upon OFDR, the frequency is different by the nature of OFDR technique.

Compared with prior approaches for DAS sensing over multi-span systems, the following advantages flow from the undersea system 800. 1) All repeater designs are the same. 2) There is 100% IU power usage. 3) There is a reduced fading penalty thanks to the frequency diversity native when signals are averaged over different wavelengths.

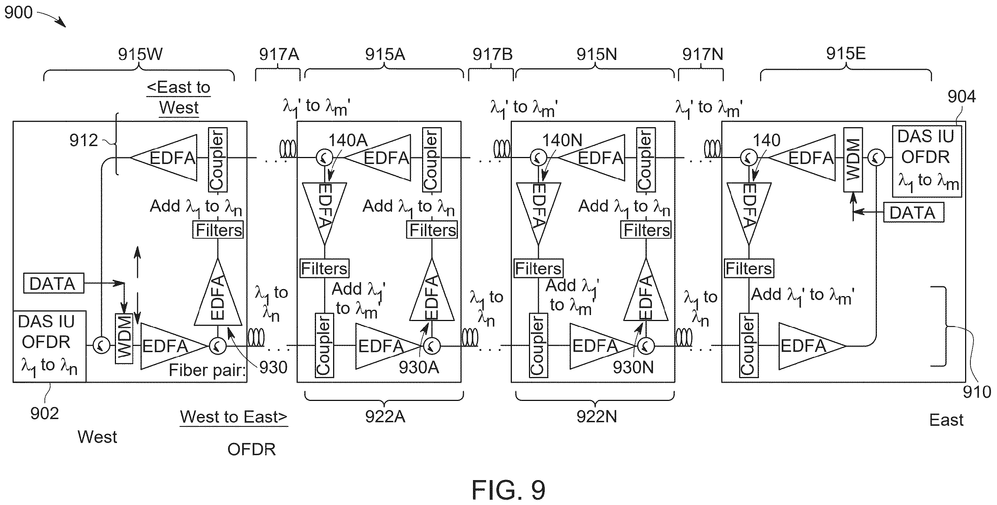

In additional embodiments of the disclosure, an undersea DAS sensing system with uniform undersea design using the OFDR technique is provided. As shown in **FIG. 9****,** a multi-span sensing system is provided, shown as system 900. The system 900 includes a transmitter 902, which transmitter may be located at a first terrestrial station, to launch sensing signals according to the OFDR technique along a west-to-east path, shown as path 910, and a transmitter 904, which transmitter may be located at a second terrestrial station, to launch sensing signals according to the OFDR technique along the east-to-west path, shown as path 912. A series of spans, shown as spans 917A, 917B-917N are shown. A series of repeaters are shown as repeater 915W, 915A-915N, and 915E are shown. The repeaters 915A-915N are bidirectional, to route signals through two different loopbacks within a given repeater. Each repeater may include at least EDFAs shown, for example, as EDFA 930, EDFA 930A, EDFA 930N, EDFA 140, EDFA 140A, EDFA 140N; filters, circulators and couplers for each respective loopback path.

Note that the filters in the optical loopback path need to allow all signals that are transmitted over all OFDR channels from the same direction to pass through and be sent back to the reverse direction. The Rayleigh backscattered signals from different locations of the same channel don't induce optical interference, since the optical frequency of the Rayleigh backscattered signals received from different locations are inherently different in frequency.

Note that in different embodiments of the system 900, the number of OFDR channels may be any number N (N>1), and the sensing signal SNR and sensitivity can be increased by N times. One advantage of this OFDR scheme as depicted in FIG. 9 relative to the OTDR scheme in FIG. 4 and FIG. 8 is that the number of OFDR channels can be added gradually to system as the sensitivity requirements increases. In implementations where the system 900 is part of a subsea communications system, in principle one can remove a few DATA channels and replace them with OFDR channels to obtain the sensitivity required by customers. For example, the DATA channels in FIG. 9 have to be different in wavelength than the sensing channels (λ₁ to λₙ in west to east direction, and λ₁' to λₘ' in east to west direction).

Compared with prior approaches for DAS sensing over multi-span systems, the following advantages flow from the system 900.
1) All repeater designs may be the same.
2) 100% duty cycle
3) 100% OFDR IU power usage is realized
4) Minimum fading penalty, due to the frequency diversity native to the OFDR technique.
5) Bi-directional sensing provides no penalty and is preferred.
6) The design allows to co-propagate DAS sensing with data channels, with little impact to data channels, and small penalty from data channels.
7) Chirped continuous wave (CCW) channel, no transient effects in EDFA.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Further, although the present disclosure has been described herein in the context of a particular implementation, in a particular environment for a particular purpose, those of ordinary skill in the art will recognize that its usefulness is not limited thereto and that the present disclosure may be beneficially implemented in any number of environments for any number of purposes. Accordingly, the claims set forth below should be construed in view of the full scope and breadth of the present disclosure as described herein.

## Claims

1. A receiver system for distributed acoustic sensing (DAS), comprising:
a separating component to receive a reflected signal, the reflected signal comprising a frequency chirp-modulated signal that is distributed over a plurality of wavelengths, and to separate the reflected signal according to wavelength into a plurality of optical signals;
a coherent mixer array comprising a plurality of coherent mixers to mix the plurality of optical signals with a given local oscillator signal at the respective plurality of wavelengths, into a plurality of mixed optical signals;
a photodetector array comprising a plurality of photodetectors to receive the plurality of mixed optical signals and convert the plurality of mixed optical signals into a plurality of electrical signals, respectively;
an analog to digital converter (ADC) assembly comprising a plurality of ADCs, wherein the ADC assembly is configured to process the plurality of electrical signals concurrently, and output the plurality of electrical signals as a plurality of digital signals;
and
a digital signal processing (DSP) block, wherein the DSP block is configured to receive the plurality of digital signals concurrently and to process the plurality of digital signals to convert the plurality of digital signals into phase data associated with the plurality of wavelengths, respectively.

2. The receiver system of claim 1,
wherein the electrical signals are processed to yield: ${\sum }_{{λ}_{0}}^{{λ}_{199}} {∅}_{{l}_{1}}^{{λ}_{n}} \left({t}_{1}\right) {\sum }_{{λ}_{0}}^{{λ}_{199}} {∅}_{{l}_{1}}^{{λ}_{n}} \left({t}_{2}\right) .$

3. The receiver system of claim 1, wherein the given local oscillator signal is received from a multitone transmitter that generates the given local oscillator signal as a chirp modulated OFDR signal, wherein a given frequency of a plurality of frequencies provides a measure of a location of a disturbance.

4. A distributed acoustic sensing (DAS) system, comprising:
a transmitter, the transmitter comprising:
a multi-tone source to generate a sensing signal over a plurality of wavelengths;
a modulator assembly, to perform a frequency modulation of the sensing signal over the plurality of wavelengths to generate a frequency chirp modulated signal; and
a receiver, to receive a reflected signal, derived from the sensing signal, wherein the reflected signal comprises a plurality of optical signals distributed over the plurality of wavelengths,
wherein the receiver is configured to beat the frequency chirp modulated signal with the reflected signal to generate a plurality of output signals, wherein a frequency of an output signal provides a measure of a location of a disturbance.

5. The distributed acoustic sensing (DAS) system of claim 4, the receiver further comprising:
a separating component to receive the reflected signal, the separating component being configured to separate the reflected signal according to wavelength into the plurality of optical signals;
a coherent mixer array comprising a plurality of coherent mixers to mix a given optical signal of the plurality of optical signals with a given local oscillator signal generated from a local oscillator of the transmitter at a given wavelength of the given optical signal, in order to generate the output signal at the given wavelength;
a photodetector array comprising a plurality of photodetectors to receive the output signal and convert the output signal into an electrical signal;
an analog to digital converter (ADC) assembly comprising a plurality of ADCs to sample the electrical signal;
and
a digital signal processing (DSP) block, wherein the DSP block is configured to receive a plurality of digital signals from the ADC assembly concurrently and to process the plurality of digital signals to convert time domain electrical data into phase data associated with the given wavelength.

6. The distributed acoustic sensing (DAS) system of claim 5, wherein the electrical signal is processed to yield: ${\sum }_{{λ}_{0}}^{{λ}_{199}} {∅}_{{l}_{1}}^{{λ}_{n}} \left({t}_{1}\right) {\sum }_{{λ}_{0}}^{{λ}_{199}} {∅}_{{l}_{1}}^{{λ}_{n}} \left({t}_{2}\right) .$

7. The distributed acoustic sensing (DAS) system of claim 4, the transmitter further comprising:
a demultiplexing component to output the sensing signal over the plurality of wavelengths separately;
a coupler assembly to receive sensing signal over the plurality of wavelengths;
a wave combiner to receive the sensing signal and combine the plurality of wavelengths into an output signal.

8. The distributed acoustic sensing (DAS) system of claim 7, the transmitter further comprising a frequency chirp modulator.

9. The distributed acoustic sensing (DAS) system of claim 8, wherein the frequency chirp modulator comprises plurality of modulators arranged to modulate a given wavelength of the sensing signal separately from other wavelengths of the sensing signal.

10. The distributed acoustic sensing (DAS) system of claim 9, wherein the frequency chirp modulator comprises a single modulator arranged to modulate all of the plurality of wavelengths.

11. A method for distributed acoustic sensing (DAS), comprising:
receiving a reflected signal, over a plurality of channels corresponding to a plurality of wavelengths, respectively;
separating the reflected signal according to wavelength into a plurality of optical signals;
mixing the plurality of optical signals with a plurality of local oscillator signals at the respective plurality of wavelengths;
converting the plurality of mixed signals into a plurality of analog electrical signals, respectively;
converting the plurality of analog electrical signals concurrently into a plurality of digital signals;
receiving the plurality of digital signals concurrently, and processing the plurality of digital signals to convert the plurality of digital signals into phase data associated with the plurality of wavelengths, respectively.

12. The method of claim 11, wherein the plurality of digital signals are processed according to ${\sum }_{{λ}_{0}}^{{λ}_{199}} {∅}_{{l}_{1}}^{{λ}_{n}} \left({t}_{1}\right) {\sum }_{{λ}_{0}}^{{λ}_{199}} {∅}_{{l}_{1}}^{{λ}_{n}} \left({t}_{2}\right) .$

13. The method of claim 11, wherein the plurality of local oscillator signals comprise a plurality of chirp modulated OFDR signals, distributed over a plurality of beat frequencies, respectively, wherein a given frequency of the plurality of beat frequencies provides a measure of a location of a disturbance.

14. A method of distributed acoustic sensing (DAS), comprising:
generating a sensing signal over a plurality of wavelengths using a multitone source;
performing a frequency modulation of the sensing signal over a plurality of channels corresponding to the plurality of wavelengths, respectively, to generate a frequency chirp modulated signal; and
receiving a reflected signal, derived from the sensing signal, wherein the reflected signal comprises a plurality of optical signals distributed over the plurality of channels,
beating the frequency chirp modulated signal with the reflected signal to generate a plurality of output signals, wherein a frequency of an output signal provides a measure of a location of a disturbance.
